# EUROPEAN PATENT SPECIFICATION

(11) **EP 4 027 800 B1**
(45) Date of publication and mention of the grant of the patent: **25.02.2026**
(21) Application number: 20750283.2
(22) Date of filing: 06.08.2020
(51) Int. Cl.: A23K 10/20, A23K 50/40, A23K 20/147, A23K 50/42

(54) **PET FOOD COMPRISING A PROTEIN COMPOSITION AND METHOD OF PRODUCING SAID FOOD**
HAUSTIERFUTTER MIT EINER PROTEINZUSAMMENSETZUNG UND VERFAHREN ZUR HERSTELLUNG DIESES FUTTERS
ALIMENT POUR ANIMAUX DE COMPAGNIE COMPRENANT UNE COMPOSITION DE PROTÉINE ET PROCÉDÉ DE PRODUCTION DUDIT ALIMENT

(30) Priority: 06.08.2019 BE 201905507; 06.08.2019 GB 201911222
(43) Date of publication of application: 20.07.2022
(73) Proprietor: Emgee Trading BVBA, 3530 Houthalen-Helchteren (BE)
(72) Inventor: GOULD, Linda Marie, 3530 Houthalen-Helchteren (BE)
(74) Representative: Brantsandpatents bv
(86) International application number: PCT/EP2020/072186
(87) International publication number: WO 2021/023839

(56) References cited:
- US-B2- 6 783 792
- N.N.: "Nutritional Guidelines for Complete and Complementary Pet Food for Cats and Dogs", October 2021 (2021-10-01), pages 1 - 98, Retrieved from the Internet <URL:https://europeanpetfood.org/wp-content/uploads/2022/03/Updated-Nutritional-Guidelines.pdf> [retrieved on 20230920]
- ANONYMOUS: "Celtic Connection - Handcrafted Holistic Pet Food", 9 November 2018 (2018-11-09), XP055683889, Retrieved from the Internet <URL:https://web.archive.org/web/20181109160655/http://emgeetrading.com/celtic-connection.html> [retrieved on 20200407]

## Description

### FIELD OF THE INVENTION

The present invention relates to a pet food and a method of producing said pet food.

### BACKGROUND

Food allergies, or food hypersensitivities, commonly afflict household pets such as dogs, cats, even ferrets. These allergies can cause the pet to exhibit skin problems, digestive problems, behavioural problems, or others which are aggravating both to pet and pet owner. Food is one culprit behind hypersensitive and allergic reactions in household pets.

Traditionally one may replace the pet's usual food with another one to which the pet should not be allergic. Simply changing from one protein source to another, however, provides at best a partial solution to a food hypersensitivity problem. Unfortunately, pets suffering from inflammatory bowel disorders and other pathological conditions often quickly become allergic to the new protein source. Likewise, one may randomly eliminate ingredients from the pet's diet. However, an elimination diet may result in nutritional imbalances and is therefore discouraged.

As an alternative, one could change the identity of the food protein by reducing its antigenicity. Heat denaturation often fails, because most antigens are heat-resistant. Furthermore, heat denaturation, in some cases, exposes antigens hidden in the native from of the proteins, and therefore can increase rather than decrease the antigenicity of the heat-denaturated protein.

Other alternatives physically remove the antigenic proteins. US 6 783 792 describes a composition comprising partially hydrolysed proteins for use as a hypoallergenic pet food, and a process for producing the composition.

Likewise, US 6 403 142 describes solid hypoallergenic pet foods comprising a component that contains protein or protein fragments wherein all of said component is partially hydrolysed. The protein component is hydrolysed by acidic, alkaline or enzymatic hydrolysis.

EP 1 802 273 describes a hypoallergenic pet food composition comprising a hydrolysate in a semi-solid formulation, and a method for making that composition.

Protein treatments like hydrolysis, or even dialysis or ultrafiltration, are expensive and rather cost-prohibitive for pet foods.

There is a need for a hypoallergenic, nutritionally-balanced food, providing a favourable taste, no allergenicity, a high nutritive value, good absorptivity and digestibility. Furthermore, the method of producing the feed should be cost effective. The present invention aims to resolve at least some of the problems and disadvantages mentioned above.

### SUMMARY OF THE INVENTION

The present invention and embodiments thereof serve to provide a solution to one or more of above-mentioned disadvantages. To this end, the present invention relates to a pet food according to claim 1. The pet food comprises a protein composition. The protein sources in the composition are selected in that hypersensitive or allergic reactions are omitted. Preferred embodiments of the pet food are shown in any of the claims 2 to 9.

In a second aspect, the present invention relates to a method for producing a pet food according to claim 10. More particular, the method as described herein provides a pet food of high quality and purity. Preferred embodiments of the method are shown in any of the claims 11 to 12.

### DETAILED DESCRIPTION OF THE INVENTION

The present invention concerns a pet food comprising a protein composition. The pet food of current invention provides a nutritionally-balanced diet, which is hypoallergenic due to the carefully selected protein sources. Providing a pet food which is intrinsically hypoallergenic reduces the likelihood of a hypersensitivity or allergic response.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight" here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

"Pet" refers to a domestic companion animal, and particularly domestic companion animals in need of a proteinaceous diet of the order of Carnivora. Dogs, cats, and ferrets are a specific, non-limiting, example of a pet.

As used herein "animal feed", "pet food" or "kibble" are all intended for ingestion by the pet.

"Food hypersensitivity" as used herein is an intolerance, allergy or other immune-mediated adverse reaction to a food fed to a pet.

"Hypoallergenic" as used herein refers to a composition that when fed to a pet at customary levels that provide adequate nutrition over the pet's life does not produce a clinically discernible allergic reaction.

The term "amino acid" as used herein is to be understood to mean the free amino acid or the esters, amides or salts thereof, in which form the amino acids may also be employed without detracting from their nutritional utilization.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention provides a pet food comprising a protein composition, wherein said protein composition comprises at least two different protein sources, wherein said protein sources are isolated from animal material from the same animal group, wherein said animal group is chosen from the groups of fowl, teleost, bovid, leporid, or deer, and wherein the total concentration of essential amino acids in said protein composition is between 5 and 15 % by weight in said food, and wherein said food has a digestibility of at least 75 %. Digestibility is measured as part of the National Research Council's '4-step method' predictive equation to determine metabolizable energy in pet food. For dogs the calculation is: 91.2 - (1.43 x percentage crude fibre in dry matter). For cats the calculation is: 87.9 - (0.88 x percentage crude fibre in dry matter) (National Research Council. 2006. Nutrient Requirements of Dogs and Cats. Washington, DC: The National Academies Press. https://doi.org/10.17226/10668).

It was found that the protein composition of pet food should comprise at least two different protein sources and the protein sources should be isolated from animals, from the same animal group chosen from the groups of fowl, teleost, bovid, leporid or deer.

All other animal derived components of said pet food are derived from animals from the same animal group, wherein said animal is selected from the group of fowl, teleost, bovid, leporid or deer. Besides animal derived protein sources, the pet food comprises animal derived fat, animal derived ash, animal derived carbohydrates and animal derived oils, such as omega 3 and omega 6. All animal derived components in said pet food are derived from animals belonging to the same animal group.

The total concentration of first, second and additional protein sources in said pet food is at least 60 % by weight, preferably 70 % by weight in order to meet the nutritionally requirements of the pet.

Species belonging to these animal groups provide hypoallergenic material and are therefore preferred in pet food. In addition, the protein sources provide essential amino acids. Preferably, the different protein sources are selected in that they are complementary in providing the essential amino acids. The total concentration of essential amino acids in said protein composition is preferably between 5.5 and 14.5 % by weight, more preferably between 6 and 14.5 % by weight, more preferably 6.5 and 13.5 % by weight, more preferably 7 and 13.5 % by weight, more preferably 7.5 and 13 % by weight. These concentrations of essential amino acids in the pet food provide the qualitative requirements of essential amino acids by pets. With these concentrations pets will not be deficient for any one of the essential amino acids.

In a preferred embodiment of current invention, the total concentration of essential amino acids in said pet food is between 8 and 13 % by weight. This preferred embodiment still provides the quantitative requirements of essential amino acids by pets. In addition, the concentration of essential amino acids is formulated in that no excess of essential amino acids is provided in the food. An excess of essential amino acids is excreted by the body, as the body is unable to store essential amino acids. Therefor it is needless and cost-prohibitive to provide a surplus amount of essential amino acids.

In a further embodiment of current invention, the essential amino acids in the pet food are chosen from the group consisting of arginine, histidine, isoleucine, leucine, lysine, methionine, tryptophan, threonine, phenylalanine, and valine, and wherein arginine, isoleucine, lysine, phenylalanine, and valine each have a concentration of at least 1 % by weight in said food. The food of current invention provides both the quantitative and qualitative requirements of essential amino acids by pets.

In a particularly preferred embodiment of current invention, the protein composition further comprises non-essential amino acids, wherein a total concentration of said non-essential amino acids is between 10 and 20 % by weight in said food. Although these amino acids are called non-essential amino acids, there is a dietary essentiality of said non-essential amino acids for pets to achieve their full genetic potential for growth, development, reproduction, lactation, and resistance to metabolic and infectious diseases. The protein sources of current invention are selected to also meet the quantitative dietary requirements of the non-essential amino acids by pets.

Preferably the concentration of said non-essential amino acids is between 11 and 20 % by weight, more preferably between 12 and 19,5 % by weight, between 13 and 19.5 % by weight, between 13.5 and 19 % by weight, between 14 and 19 % by weight, between 14.2 and 18.8 % by weight, between 14.4 and 18.6 % by weight, between 14.4 and 18.6 % by weight, between 14.6 and 18.4 % by weight, between 14.8 and 18.2 % by weight, between 15.0 and 18 % by weight, between 15.2 and 17.8 % by weight, between 15.4 and 17.6 % by weight. These concentrations of non-essential amino acids meet the metabolic needs of the pets and maintain the nitrogen balance.

The non-essential amino acids of current invention are preferably chosen from the group consisting of alanine, aspartic acid, cysteine, glutamic acid, glycine, hydroxyproline, ornithine, proline, proline, serine and tyrosine. Accordingly, the protein sources are selected in that the balance among the various non-essential amino acids meets the metabolic needs and maintains the nitrogen balance of pets.

Amino acids (except glycine) contain one or more asymmetric centres and thus may exist in stereoisomeric forms. Preferably the amino acids, both essential and non-essential amino acids, of current invention have a left-handed configuration. The left-handed configuration of the amino acids is preferred over the right-handed ones, as these amino acids are abundantly available and do not require *de novo* synthetic pathways. Besides, the animal body has only a very limited capacity for enzymatically converting some amino acids to the L-form from the D-from. In addition, an (over)supply of D-amino acids can be deleterious and can lead to an inhibition of the normal physiological function. Moreover, the left-handed configuration is essential for an optimal uptake and absorption by the gastrointestinal tract in a form, being the L-form, suitable for body protein synthesis.

Because of strong interdependencies between the required level of a given amino acid and the level of one or more of the other amino acids present in the pet food, it is not practicable to establish a precise range of levels for each of the amino acids. Nevertheless, the concentration of both cysteine and methionine, as well as the concentration of both phenylalanine and tyrosine is preferably specified. Cysteine and tyrosine are classically not considered to be essential amino acids, as they can be synthesized from methionine and phenylalanine in the liver, respectively. However, pets are unable to synthesize cysteine and tyrosine *de novo,* which emphasizes the need of the precursor amino acids, methionine and phenylalanine, for optimal development and health of the pet.

In a preferred embodiment the protein composition in said pet food comprises a mix of methionine and cysteine, wherein the methionine and cysteine mix has a concentration of between 0.7 and 1.2 % by weight. Preferably, the concentration of said mix is between 0.7 and 1.15 % by weight, more preferably between 0.7 and 1.10 % by weight, between 0.7 and 1.05 % by weight. In a more preferred embodiment, the ratio of methionine and cysteine in the methionine and cysteine mix is preferably between 50:50 and 65:35.

In a preferred embodiment the protein composition in said pet food comprises a mix of phenylalanine and tyrosine, wherein phenylalanine and tyrosine mix has a concentration of between 1.3 and 2.1 % by weight. Preferably, the concentration of said mix is between 1.4 and 2.1 % by weight, more preferably between 1.45 and 2.1 % by weight, between 1.5 and 2.1 % by weight, between 1.55 and 2.1 % by weight, between 1.6 and 2.1 % by weight, between 1.65 and 2.05 % by weight. In a more preferred embodiment, the ratio of phenylalanine and tyrosine in the phenylalanine and tyrosine mix is preferably between 40:60 and 60:40.

In an embodiment of current invention, the digestibility of the pet food is at least 80 % by weight, preferably between 80 and 95 % by weight. This high digestibility is enabled by the selection of protein sources, providing available and digestible dietary amino acids. Amino acids in processed foods may react with compounds to form nutritionally unavailable derivatives. The protein sources isolated from fowl, teleost, bovid, leporid or deer are selected in that they do not need any further processing, which makes the amino acids nutritionally available.

Fowl are birds belonging to one of two biological orders, namely game or land fowl (Galliformes) and waterfowl (Anseriformes). In a preferred embodiment the different protein sources are isolated from the same biological order. Non-limiting examples of birds belonging to the order of Galliformes include chicken, quail, pheasant, and turkey. Non-limiting examples of birds belonging to the order of Anseriformes are duck and goose.

Teleost are a group of ray-finned fishes, which are arranged into about 40 orders. In a preferred embodiment of current invention, the different protein sources are preferably chosen from the order of Clupeiformes or Salmoniformes. Fishes belonging to the Clupeiformes include, without limitation, herrings, and the Salmoniformes include, without limitation, salmon and trout.

Bovid are a group of cloven-hoofed, ruminant mammals belonging to the biological family of Bovidae. In a preferred embodiment of current invention, the different protein sources are preferably chosen from the biological subfamily Caprinae. In a more preferred embodiment of current invention, the different protein sources are preferably chosen from the biological tribe Caprini. In an even more preferred embodiment of current invention, the different protein sources are chosen from the genus *Capra* and/or *Ovis.* Without limitation, *Capra* includes goat and *Ovis* includes sheep.

Leporid are a group of leporid species belonging to a mammal family Leporidae in the order Lagomorpha. In a preferred embodiment of current invention, the different protein sources are preferably chosen from the leporid species belonging to the family Leporidae. Leporid species include, without limitation, rabbits and hares.

Deer are a group of hoofed, ruminant mammals forming the family Cervidae. The two main groups of deer are the Cervinae, including without limitation elk, and Capreolinae, including without limitation reindeer and moose. In a preferred embodiment of current invention the protein sources are preferably chosen from the subfamily Capreolinae and/or Cervinae.

In a preferred embodiment the animal-based protein sources are disease free.

In a preferred embodiment the pet food of current invention has a crude protein content of between 20 and 60 % by weight. Preferably the protein composition has a crude protein content of between 20 and 60 % by weight.

The crude protein analysis is a chemical analysis of the food, whereby the amount of nitrogen present is used to estimate the amount of protein in the food. While nitrogen does come from animal protein, it may also come from non-animal proteins like grains, as well as other non-protein nitrogen sources. In a preferred embodiment of current invention the crude protein content of current invention originates from the different protein sources. These protein sources are animal proteins. Preferably the pet food of current invention does not comprise the toxic melamine or any derivative thereof.

The crude protein content is known by a person skilled in the art. Methods for quantifying the crude protein content of a feed is described in the prior art. The determination of crude protein in animal feeds, like pet food, is preferably assessed by using the Kjeldahl method.

The pet food of current invention comprises purines, wherein a total concentration of purines in said food is lower than 1 % by weight. The protein sources of current invention are selected in that they have a low purine content and therefor do not elicit the formation of urate stones. Some pets lack the necessary enzymes required to break down nutrients, like among others purine. Although purine is essential for proper nutrition, when purine is not broken down properly, it is converted to uric acid. High levels of uric acid can lead to the formation of kidney stones in the urethra or bladder. Some animals, like for example Dalmatians, may be genetically predisposed to urate kidney stones.

Preferably, the total concentration of purines in the pet food of current invention is lower than 0.8 %, lower than 0.6 %, lower than 0.4 %, lower than 0.45 %, lower than 0.40 %. Purines are preferably chosen from the group consisting of adenine, adenosine, guanine, guanosine, xanthine, and hypoxanthine. The low purine content of the pet food prevents the formation of urate stones and the pet food of current invention provides the nutritionally needed ingredients limiting metabolic diseases due to hypersensitivity or allergic reactions.

The pet food comprises one or more additional ingredients selected from the group comprising of vegetables, fruits, botanical herbs, and/or spices. These additional ingredients provide the nutritionally required carbohydrates, fibres, antioxidants, vitamins, spore elements and minerals, and complement the protein composition of the pet food. Preferably, said ingredients are of non-GMO origin.

Preferably, the pet food comprises no grain, nor gluten. More preferably, the pet food comprises no artificial flavours, colours, preservatives, genetically modified organisms (GMOs), or fillers.

Preferred vegetables comprised within the pet food are selected from the group comprising of sweet potato, lucerne, peas, linseed, carrots, pumpkin, and spinach. Fruits are preferably selected from the group comprising of cranberries, apples, and pears. The vegetables and fruits are preferably dried. Botanical herbs are preferably chosen from the group comprising of rosemary, dandelion, juniper, liquorice, angelica, rose hip, chamomile, burdock, nettle, aniseed, fenugreek, peppermint, marigold, marshmallow, fennel, turmeric, milk thistle, *Yucca schidigera,* and cinnamon. Preferably roots, leaves, seeds, or flowers are used of the botanical herbs. Preferably the botanical herbs are dried. Preferably extracts are used of the botanical herbs. Furthermore, the pet food preferably comprises therapeutic levels of nutritive botanical herbs.

In a preferred embodiment of current invention the pet food comprises a fat composition. The fat composition preferably has a total concentration of between 4 and 24 % by weight of the pet food. Preferably, the concentration is between 4 and 22 % by weight, more preferably between 4.5 and 20 % by weight. Said fat composition preferably comprises fatty acids, preferably fatty acids chosen from the group comprising of linoleic acid, alpha-linolenic acid, eicosapentaenoic acid (EPA), and/or docosahexaenoic acid (DHA). These fatty acids reduce the incidence of cardiovascular disorders.

Preferably the pet food comprises algae, for instance *Schizochytrium limacinum.* Said algae is preferably dried, in oil or in paste form. Said algae provides docosahexaenoic acid (DHA), a long-chain, highly unsaturated omega-3 fatty acid, which improves the overall development and health.

In a non-limiting example the fat composition further comprises arachidonic acid and taurine. Some animals have dietary requirements for the latter, like for instance cats or ferrets.

The pet food of current invention comprises antioxidants, trace elements, minerals and vitamins. Preferably calcium, sodium, chloride, manganese, phosphorus, copper, magnesium, zinc, potassium, iron, iodine and/or selenium are comprised in the pet food in an nutritionally adequate amount.

In a preferred embodiment of current invention the pet food further comprises supplements selected from the group consisting of glucosamine, methylsulfonylmethane (MSM), and/or chondroitin sulphate.

These supplements restore or maintain the vitality of the pet by supporting the functionality of the musculoskeletal system, i.e. joints, ligaments, muscles, tendons, etc.

The pet is a dog or a cat. The pet food of current invention is optimized for a dog or cat in all stages of development. Depending on the age of the dog or cat different amounts of the pet food are administered, preferably orally.

In a preferred embodiment the pet food of current invention is a dry, semi-solid or moist food, preferably said food is a dry kibble. A dry kibble can be easily handled and proportionated. The kibble is attractive for pets and maintains the dental health. The pet food can also be distributed in other forms besides a kibble. Other useful forms include without limitation a liquid, a gruel, or a powder.

A second aspect of current invention relates to a method for producing a pet food, wherein said method comprises the steps of admixing a first protein source, a second protein source and optionally additional protein sources resulting in a protein composition, wherein said protein sources are isolated from animal material from the same animal group, wherein said animal group is chosen from the groups of fowl, teleost, bovid, leporid or deer, wherein the total concentration of first, second and additional protein sources in said pet food is at least 60 % by weight, preferably 70 % by weight.

The method comprises the steps of admixing other animal derived components, wherein all other animal derived components are equally derived from animals from the same animal group, wherein said animal is selected from the group of fowl, teleost, bovid, leporid or deer. Besides animal derived protein sources, animal derived fat, animal derived ash, animal derived carbohydrates and animal derived oils, such as omega 3 and omega 6 are admixed in the pet food. All animal derived components admixed in said pet food are derived from animals belonging to the same animal group.

The method of current invention provides a pet food of high quality. The protein sources comprised in said pet food are of animal origin and therefor of high quality. In addition, these protein sources are selected in that they provide hypoallergenic meat and the dietary required nutrients for the pet's health.

Preferably, the first and second protein source are admixed in a ratio of between 5:1 and 1:1. More preferably 4:1 and 1:1; more preferably 3:1 and 1:1, more preferably 3:1 and 2:1.

In addition to said protein sources, the pet food is further nutritionally improved by the addition of ingredients, which provide the fibre minerals, spore elements and vitamins to ensure an adequate nutrient intake for the pet's health and vitality.

One or more additional ingredients selected from the group consisting of vegetables, fruits, herbs and/or spices are admixed in the food.

In a more preferred embodiment of current invention supplements selected from the group consisting of glucosamine, methylsulfonylmethane (MSM), and/or chondroitin sulphate are admixed in the food.

In a particular preferred embodiment of current invention, the pet food is produced as a dry food, preferably as a kibble.

The kibble is preferably produced by an extruder. An extruder and the process of extruding is familiar for a person skilled in the art. All composition, ingredients and supplements are mixed in the right amount and preferably mixed with seaweed, a natural emulsifier. Seaweed is a natural component which has an overall high availability.

The invention is further described by the following non-limiting examples which further illustrate the invention, and are not intended to, nor should they be interpreted to, limit the scope of the invention.

### EXAMPLES

The present invention will now be further exemplified with reference to the following example(s). The present invention is in no way limited to the given examples or to the embodiments presented in the figures.

### Example 1: Crude protein content of cat and dog feed

The cat and dog feed of current invention provide high quality proteins. Different protein sources were combined and the crude protein content was measured by Kjeldahl method.

**Table 1: Protein sources in the pet food according to current invention**

| | Crude protein content |
|---|---|
| **Protein sources in a dog feed (based on dry matter at 10% moisture)** | |
| Lamb and goat | 23 - 29 % by weight |
| Chicken and turkey | 30 - 36 % by weight |
| Salmon and trout | 30 - 36 % by weight |
| Duck and goose | 29 - 35 % by weight |
| Deer and moose | 29 - 35 % by weight |
| | |

| **Protein sources in a cat feed (based on dry matter at 8% moisture)** | |
|---|---|
| Chicken, duck and turkey | 39 - 45 % by weight |
| Duck, quail and pheasant | 36 - 42 % by weight |
| Salmon, herring and trout | 40 - 46 % by weight |
| Deer, elk and moose | 36 - 42 % by weight |
| | |

| **Protein sources in a ferret feed (based on dry matter at 10% moisture)** | |
|---|---|
| Chicken, duck and turkey | 39 - 45 % by weight |
| Rabbit and hare | 35 - 41 % by weight |
| Deer, elk and moose | 36 - 42 % by weight |

The cat and ferret feed (the latter as comparative example) as shown in current example have a higher crude protein content than the dog feed to meet the nutritional requirements of the cat and ferret.

All other animal derived components (fat, ash, carbohydrates, oils) are equally derived from the same animal group as from which the protein sources are derived.

### Example 2: Comparative test of cat food

Six fully grown Norwegian forest cats of at least one year old were provided with the feed of current invention. Six other cats, of the same race and age were provided with a specialized feed for cats. The cats were in in good health and of known weight, sex and breed. Cats were fed twice a day and at the same time each day. A total intake of 50 g a day was fed. Water was available at all times. During the follow-up the behaviour of the cats was monitored and the skin was regularly controlled for redness. Also faeces samples were collected. All 6 cats fed with the feed of current invention showed normal behaviour, i.e. social behaviour, playfulness, self-grooming, and appetite. The skins of the cats did not show any red spots or irritated zones due to abnormal heavy scratching. Furthermore, the cats' fur maintained its healthy shine. The faeces samples had a healthy colour, consistency and normal pH of about 7.5. The stool sample of the 6 cats fed with the specialized feed for cats, were rather yellow-green in colour and rather foul-smelling indicating a high amount of fats in the faeces and malabsorption of the nutrients in the feed. The fur of the cats changed, in that it was no longer clean, shine and free of mats. In the end, the diet of these six cats was changed by the feed of current invention. After two weeks feeding, the self-grooming of the cats was re-established and the cats' coat looked healthy. The colour, consistency and pH of the faeces samples restored and skin irritation was no longer observed.

The present invention is in no way limited to the embodiments described in the examples. On the contrary, methods according to the present invention may be realized in many different ways without departing from the scope of the invention.

### Example 3: Comparative test of ferret feed (Comparative example, not part of the invention)

A first group of five one-year old ferrets were fed with the feed comprising rabbit and hare as the selected protein sources. A second group of five one-year old ferrets were fed with a commercial feed comprising rabbit. Each ferret was daily fed with 35 g of the feed and fresh water was present at all times. The ferrets were monitored for their behavioural, animal coat and metabolic characteristics.

During the first weeks of monitoring the ferrets, they all showed normal characteristics. They showed normal hunting and play periods, followed by periods of deep sleep. The ferrets' fur looked clean and shiny, and their faeces and urine had normal pH and colour. After two weeks of feeding group one and two the ferret feed as mentioned above, the ferrets of group two had loose stools and often defecated outside the litter box. In addition, the ferrets showed lethargic behaviour. Their fur looked unhealthy and felt dry and coarse. The stool samples were analysed for bacterial, viral or parasitic infections, but showed negative results. The ferrets of group two were no longer fed with the commercial feed, but with the feed of current invention. After three days of the diet change, the ferrets showed again normal behavioural characteristics and a more healthy coat. The ferrets defecated in the litter box and the colour and consistency of the faeces was back to normal.

This feed provides a high nutritious and digestible feed specialized for ferrets, contributing to a healthy and happy life. As the feed is free of grains and gluten, it is an optimal feed for the carnivorous ferrets.

### Example 4: Amino acid profile of pet food containing duck, goose or a combination of both (recipe according the current invention).

The concentration of arginine, histidine, isoleucine, leucine, lysine, methionine, threonine, phenylalanine + tyrosine, tryptophan and valine was determined for pet food containing only duck or only goose or for pet food according to the current invention containing duck and goose.

**Table 2: Amino acid profile of pet food containing duck, goose or a combination of both (recipe according the current invention)**

| ***Amino Acid*** | ***Minimal Nutritional Requirement (g*/*100g)*** | ***Duck (g*/*100g)*** | ***Goose (g*/*100g)*** | ***Duck with Goose: current invention (g*/*100g)*** |
|---|---|---|---|---|
| Arginine | *0,82* | 0,75 | 0,57 | 1,71 |
| Histidine | *0,39* | 0,23 | 0,24 | 0,57 |
| Isoleucine | *0,65* | 0,52 | 0,42 | 1,02 |
| Leucine | *1,29* | 0,87 | 0,76 | 1,83 |
| Lysine | *0,88* | 0,89 | 0,71 | 1,71 |
| Methionine | *0,35* | 0,29 | 0,22 | 0,63 |
| Threonine | *0,81* | 0,46 | 0,41 | 1,06 |
| Phenylalanine + Tyrosine | *1,3* | 0,52 | 0,67 | 1,85 |
| Tryptophan | *0,23* | 1,39 | 0,12 | 0,30 |
| Valine | *0,68* | 0,55 | 0,45 | 1,18 |

In table 2 the minimal nutritional requirement for the amino acids can be compared to the concentration of these amino acids present in any of the three pet foods (in g/100g). An essential amino acid is an amino acid that cannot be synthesized de *novo* by the organism at a rate commensurate with its demand, and thus must be supplied in its diet. If one of the essential amino acids is less than needed for an animal the utilization of other amino acids will be hindered and thus protein synthesis will be less than adequate. Protein deficiency has been shown to affect all of the body's organs and many of its systems. As can be appreciated from the table, pet food containing only duck or only goose does not reach the minimal nutritional requirement for arginine, histidine, isoleucine, leucine, methionine, threonine, phenylalanine + tyrosine and valine. Pet food containing only goose in addition does not reach the minimal nutritional requirement for lysine and tryptophan. Pet food according to the current invention combining duck and goose (two animals from the same group) reduces food hypersensitivities and is able to provide all the essential amino acids.

## Claims

1. A hypoallergenic and nutritionally-balanced pet food for cats or dogs comprising a protein composition, wherein said protein composition comprises at least two different protein sources, **characterized in that** said protein sources are isolated from animal material from the same animal group, wherein said animal group is chosen from the groups of fowl, teleost, bovid, leporid, or deer, and wherein the total concentration of first, second and additional protein sources in said pet food is at least 60 % by weight, preferably 70 % by weight, wherein the total concentration of essential amino acids in said protein composition is between 5 and 15 % by weight in said food, wherein all animal derived components are isolated from the same animal group as said protein sources, wherein said animal derived components include fat, ash, carbohydrates and oils, wherein the nutrient levels comprised in the pet food are nutritionally adequate as stipulated by the FEDIAF Nutritional Guidelines for complete pet food, wherein said food comprises purines, and wherein the total concentration of purines in said food is lower than 1 % by weight and wherein said food has a digestibility of at least 75 %, as measured as part of the National Research Council's '4-step method' predictive equation to determine metabolizable energy in pet food (National Research Council. 2006. Nutrient Requirements of Dogs and Cats. Washington, DC: The National Academies Press. https://doi.org/10.17226/10668).

2. The pet food according to claim 1, **characterized in that** the total concentration of essential amino acids in said food is between 8 and 13 % by weight.

3. The pet food according to any of the previous claims, **characterized in that** the essential amino acids are chosen from the group consisting of arginine, histidine, isoleucine, leucine, lysine, methionine, tryptophan, threonine, phenylalanine, and valine, and wherein arginine, isoleucine, lysine, phenylalanine, and valine each have a concentration of at least 1 % by weight, in said food.

4. The pet food according to any one of the preceding claims 1-3 **characterized in that** the digestibility of said food is at least 80 % by weight, preferably between 80 and 95 % by weight.

5. The pet food according to any one of the preceding claims 1-4, **characterized in that** said protein composition further comprises non-essential amino acids, wherein a total concentration of said non-essential amino acids is of between 10 and 20 % by weight, in said food.

6. The pet food according to any one of the preceding claims 1-5, **characterized in that** said food has a crude protein content of between 20 and 60 % by weight.

7. The pet food according to any one of the preceding claims 1-6, **characterized in that** said food comprises one or more additional ingredients selected from the group consisting of vegetables, fruits, herbs, and/or spices.

8. The pet food according to any one of the preceding claims 1-7, **characterized in that** said food further comprises supplements selected from the group consisting of glucosamine, methylsulfonylmethane (MSM), and/or chondroitin sulphate.

9. The pet food according to any one of the preceding claims 1-8, **characterized in that**, said food is a dry, semi-solid or moist product, preferably said food is a kibble.

10. A method for producing a hypoallergenic and nutritionally-balanced pet food for cats and dogs, **characterized in that** said method comprises the steps of admixing a first protein source, a second protein source and optionally additional protein sources resulting in a protein composition, wherein said protein sources are isolated from animal material from the same animal group, wherein said animal group is chosen from the groups of fowl, teleost, bovid, leporid, or deer, wherein the total concentration of first, second and additional protein sources in said pet food is at least 60 % by weight, preferably 70 % by weight, wherein the total concentration of essential amino acids in said protein composition is between 5 and 15 % by weight in said food, wherein said food comprises purines, and wherein the total concentration of purines in said food is lower than 1 % by weight, wherein all animal derived components are isolated from the same animal group as said protein sources, wherein said animal derived components include fat, ash, carbohydrates and oils, wherein one or more additional ingredients selected from the group comprising of vegetables, fruits, botanical herbs, and/or spices are added to provide the nutritionally required carbohydrates, fibres, antioxidants, vitamins, spore elements and minerals, and complement the protein composition of the pet food and wherein said food has a digestibility of at least 75 %, as measured as part of the National Research Council's '4-step method' predictive equation to determine metabolizable energy in pet food (National Research Council. 2006. Nutrient Requirements of Dogs and Cats. Washington, DC: The National Academies Press. https://doi.org/10.17226/10668).

11. Method according to claim 10, wherein one or more additional ingredients selected from the group consisting of vegetables, fruits, herbs and/or spices are admixed.

12. Method according to claims 10-11, wherein the pet food is produced as a dry food, preferably as a kibble.

## Patentansprüche

1. Hypoallergenes und ernährungsphysiologisch ausgewogenes Tierfutter für Katzen oder Hunde, eine Proteinzusammensetzung umfassend, wobei die Proteinzusammensetzung mindestens zwei unterschiedliche Proteinquellen umfasst, **dadurch gekennzeichnet, dass** die Proteinquellen aus tierischem Material der gleichen Tiergruppe isoliert sind, wobei die Tiergruppe aus den Gruppen von Geflügel, Knochenfischen, Hornvieh, Hasenartigen oder Rotwild ausgewählt ist und wobei die Gesamtkonzentration der ersten, zweiten und zusätzlicher Proteinquellen in dem Tierfutter mindestens 60 Gew.-%, vorzugsweise 70 Gew.-%, beträgt, wobei die Gesamtkonzentration essentieller Aminosäuren in der Proteinzusammensetzung in dem Futter zwischen 5 und 15 Gew.-% beträgt, wobei alle von Tieren abgeleiteten Komponenten von der gleichen Tiergruppe wie die Proteinquellen abgeleitet sind, wobei die von Tieren abgeleiteten Komponenten Fett, Asche, Kohlenhydrate und Öle beinhalten, wobei die in dem Tierfutter enthaltenen Nährstoffgehalte ernährungsphysiologisch adäquat ist, wie durch die FEDIAF Nutritional Guidelines for Complete Pet Food vorgegeben, wobei das Futter Purine umfasst und wobei die Gesamtkonzentration der Purine in dem Futter weniger als 1 Gew.-% beträgt und wobei das Futter eine Verdaulichkeit von mindestens 75 % aufweist, wie im Rahmen der ,Vier-Schritte-Verfahren'-Vorhersagegleichung des National Research Councils zum Bestimmen umsetzbarer Energie in Tierfutter gemessen (National Research Council, 2006, Nutrient Requirements of Dogs and Cats, Washington, DC: The National Academies Press, http//doi.org/10.17226/10668).

2. Tierfutter nach Anspruch 1, **dadurch gekennzeichnet, dass** die Gesamtkonzentration essentieller Aminosäuren in dem Futter zwischen 8 und 13 Gew.-% beträgt.

3. Tierfutter nach einem der vorhergehenden Ansprüche, **dadurch gekennzeichnet, dass** die essentiellen Aminosäuren aus der Gruppe ausgewählt sind, die aus Arginin, Histidin, Isoleucin, Leucin, Lysin, Methionin, Tryptophan, Threonin, Phenylalanin und Valin ausgewählt ist und wobei Arginin, Isoleucin, Lysin, Phenylalanin und Valin jeweils eine Konzentration von mindestens 1 Gew.-% in dem Futter aufweisen.

4. Tierfutter nach einem der vorhergehenden Ansprüche 1-3, **dadurch gekennzeichnet, dass** die Verdaulichkeit des Futters mindestens bei 80 Gew.-%, vorzugsweise zwischen 80 und 95 Gew.-%, liegt.

5. Tierfutter nach einem der vorhergehenden Ansprüche 1-4, **dadurch gekennzeichnet, dass** die Proteinzusammensetzung ferner nicht-essentielle Aminosäuren umfasst, wobei eine Gesamtkonzentration der nicht-essentiellen Aminosäuren in dem Futter zwischen 10 und 20 Gew.-% beträgt.

6. Tierfutter nach einem der vorhergehenden Ansprüche 1-5, **dadurch gekennzeichnet, dass** das Futter einen Rohproteingehalt zwischen 20 und 60 Gew.-% aufweist.

7. Tierfutter nach einem der vorhergehenden Ansprüche 1-6, **dadurch gekennzeichnet, dass** das Futter einen oder mehrere zusätzliche Bestandteile umfasst, die aus der Gruppe ausgewählt sind, die aus Gemüse, Obst, Kräutern und/oder Gewürzen besteht.

8. Tierfutter nach einem der vorhergehenden Ansprüche 1-7, **dadurch gekennzeichnet, dass** das Futter ferner Ergänzungsmittel umfasst, die aus der Gruppe ausgewählt sind, die aus Glucosamin, Methylsulfonylmethan (MSM) und/oder Chondroitinsulphat besteht.

9. Tierfutter nach einem der vorhergehenden Ansprüche 1-8, **dadurch gekennzeichnet, dass** das Futter ein trockenes, halbfestes oder feuchtes Produkt ist, wobei das Futter vorzugsweise Trockenfutter ist.

10. Verfahren zur Herstellung eines hypoallergenen und ernährungsphysiologisch ausgewogenen Tierfutters für Katzen oder Hunde, **dadurch gekennzeichnet, dass** das Verfahren die Schritte des Beimischens einer ersten Proteinquelle, einer zweiten Proteinquelle und optional zusätzlicher Proteinquellen umfasst, was zu einer Proteinzusammensetzung führt, wobei die Proteinquellen aus tierischem Material der gleichen Tiergruppe isoliert werden, wobei die Tiergruppe aus den Gruppen von Geflügel, Knochenfischen, Hornvieh, Hasenartigen oder Rotwild ausgewählt wird und wobei die Gesamtkonzentration der ersten, zweiten und zusätzlicher Proteinquellen in dem Tierfutter mindestens 60 Gew.-%, vorzugsweise 70 Gew.-%, beträgt, wobei die Gesamtkonzentration essentieller Aminosäuren in der Proteinzusammensetzung in dem Futter zwischen 5 und 15 Gew.-% beträgt, wobei das Futter Purine umfasst, und wobei die Gesamtkonzentration der Purine in dem Futter weniger als 1 Gew.-% beträgt, wobei alle von Tieren abgeleiteten Komponenten von der gleichen Tiergruppe wie die Proteinquellen abgeleitet werden, wobei die von Tieren abgeleiteten Komponenten Fett, Asche, Kohlenhydrate und Öle beinhalten, wobei ein oder mehrere zusätzliche Bestandteile, die aus der Gruppe ausgewählt werden, die Gemüse, Obst, botanische Kräuter und/oder Gewürze umfasst, zugesetzt werden, um die ernährungsphysiologisch erforderlichen Kohlenhydrate, Ballaststoffe, Antioxidantien, Vitamine, Spurenelemente und Mineralien bereitzustellen, und die Proteinzusammensetzung des Tierfutters zu ergänzen, und wobei das Futter eine Verdaulichkeit von mindestens 75 % aufweist, wie im Rahmen der ,Vier-Schritte-Verfahren'-Vorhersagegleichung des National Research Councils zum Bestimmen umsetzbarer Energie in Tierfutter gemessen (National Research Council, 2006, Nutrient Requirements of Dogs and Cats, Washington, DC: The National Academies Press, http//doi.org/10.17226/10668).

11. Verfahren nach Anspruch 10, wobei ein oder mehrere zusätzliche Bestandteile beigemischt werden, die aus der Gruppe ausgewählt werden, die aus Gemüse, Obst, Kräutern und/oder Gewürzen besteht.

12. Verfahren nach einem der Ansprüche 10-11, wobei das Tierfutter als trockenes Futter hergestellt wird, vorzugsweise als Trockenfutter.

## Revendications

1. Aliment pour animaux de compagnie hypoallergénique et nutritionnellement équilibré pour chats ou chiens comprenant une composition protéique, dans lequel ladite composition protéique comprend au moins deux sources de protéines différentes, **caractérisé en ce que** lesdites sources de protéines sont isolées à partir de matière animale du même groupe d'animaux, dans lequel ledit groupe d'animaux est choisi parmi les groupes suivants : volailles, téléostéens, bovidés, léporidés ou cervidés, et dans lequel la concentration totale des première, seconde et autres sources de protéines dans ledit aliment pour animaux de compagnie est d'au moins 60 % en poids, de préférence 70 % en poids, dans lequel la concentration totale d'acides aminés essentiels dans ladite composition protéique est comprise entre 5 et 15 % en poids dans ledit aliment, dans lequel tous les composants d'origine animale sont isolés à partir du même groupe d'animaux que lesdites sources de protéines, dans lequel lesdits composants d'origine animale comprennent des graisses, des cendres, des hydrates de carbone et des huiles, dans lequel les niveaux de nutriments compris dans l'aliment pour animaux de compagnie sont adéquats d'un point de vue nutritionnel, conformément aux directives nutritionnelles de la FEDIAF pour les aliments complets pour animaux de compagnie, dans lequel ledit aliment comprend des purines, et dans lequel la concentration totale de purines dans ledit aliment est inférieure à 1 % en poids et dans lequel ledit aliment présente une digestibilité d'au moins 75 %, mesurée dans le cadre de l'équation prédictive de la 'méthode en 4 étapes' du Conseil national de la recherche pour déterminer l'énergie métabolisable dans les aliments pour animaux de compagnie (National Research Council. 2006. Nutrient Requirements of Dogs and Cats. Washington, DC: The National Academies Press. https://doi.org/10.17226/10668).

2. Aliment pour animaux de compagnie selon la revendication 1, **caractérisé en ce que** la concentration totale d'acides aminés essentiels dans ledit aliment est comprise entre 8 et 13 % en poids.

3. Aliment pour animaux de compagnie selon l'une quelconque des revendications précédentes, **caractérisé en ce que** les acides aminés essentiels sont choisis dans le groupe constitué par l'arginine, l'histidine, l'isoleucine, la leucine, la lysine, la méthionine, le tryptophane, la thréonine, la phénylalanine et la valine, et dans lequel l'arginine, l'isoleucine, la lysine, la phénylalanine et la valine ont chacune une concentration d'au moins 1 % en poids, dans l'aliment en question.

4. Aliment pour animaux de compagnie selon l'une quelconque des revendications précédentes 1-3, **caractérisé en ce que** la digestibilité dudit aliment est d'au moins 80 % en poids, de préférence entre 80 et 95 % en poids.

5. Aliment pour animaux de compagnie selon l'une quelconque des revendications 1-4, **caractérisé en ce que** la composition protéique comprend en outre des acides aminés non essentiels, dans lequel la concentration totale desdits acides aminés non essentiels est comprise entre 10 et 20 % en poids dans l'aliment.

6. Aliment pour animaux de compagnie selon l'une quelconque des revendications précédentes 1-5, **caractérisé en ce que** ledit aliment a une teneur en protéines brutes comprise entre 20 et 60 % en poids.

7. Aliment pour animaux de compagnie selon l'une quelconque des revendications précédentes 1-6, **caractérisé en ce que** ledit aliment comprend un ou plusieurs ingrédients supplémentaires choisis dans le groupe constitué par les légumes, les fruits, les herbes et/ou les épices.

8. Aliment pour animaux de compagnie selon l'une quelconque des revendications précédentes 1-7, **caractérisé en ce que** ledit aliment comprend en outre des suppléments choisis dans le groupe constitué par la glucosamine, le méthylsulfonylméthane (MSM) et/ou le sulfate de chondroïtine.

9. Aliment pour animaux de compagnie selon l'une quelconque des revendications précédentes 1-8, **caractérisé en ce que** ledit aliment est un produit sec, semi-solide ou humide, de préférence ledit aliment est une croquette.

10. Procédé de production d'un aliment pour animaux de compagnie hypoallergénique et nutritionnellement équilibré pour les chats et les chiens, **caractérisé en ce que** ledit procédé comprend les étapes de mélange d'une première source de protéines, d'une seconde source de protéines et éventuellement d'autres sources de protéines pour obtenir une composition protéique, dans lequel lesdites sources de protéines sont isolées à partir de matières animales appartenant au même groupe d'animaux, dans lequel ledit groupe d'animaux est choisi parmi les groupes suivants: volailles, téléostéens, bovidés, léporidés ou cervidés, dans lequel la concentration totale de la première, de la seconde et des autres sources de protéines dans ledit aliment pour animaux de compagnie est d'au moins 60 % en poids, de préférence de 70 % en poids, dans lequel la concentration totale d'acides aminés essentiels dans ladite composition protéique est comprise entre 5 et 15 % en poids dans ledit aliment, dans lequel ledit aliment comprend des purines, et dans lequel la concentration totale de purines dans ledit aliment est inférieure à 1 % en poids, dans lequel tous les composants d'origine animale sont isolés à partir du même groupe d'animaux que lesdites sources de protéines, dans lequel lesdits composants d'origine animale comportent des graisses, des cendres, des hydrates de carbone et des huiles, dans lequel un ou plusieurs ingrédients supplémentaires choisis dans le groupe constitué par les légumes, les fruits, les herbes botaniques et/ou les épices sont ajoutés pour fournir les hydrates de carbone, les fibres, les antioxydants, les vitamines, les éléments de spores et les minéraux nécessaires sur le plan nutritionnel, et complémenter la composition protéique de l'aliment pour animaux de compagnie, et dans lequel ledit aliment a une digestibilité d'au moins 75 %, telle que mesurée dans le cadre de l'équation prédictive de la 'méthode en 4 étapes' du Conseil national de la recherche pour déterminer l'énergie métabolisable dans les aliments pour animaux de compagnie (National Research Council. 2006. Nutrient Requirements of Dogs and Cats. Washington, DC: The National Academies Press. https://doi.org/10.17226/10668).

11. Procédé selon la revendication 10, dans lequel un ou plusieurs ingrédients supplémentaires choisis dans le groupe constitué par les légumes, les fruits, les herbes et/ou les épices sont mélangés.

12. Procédé selon les revendications 10-11, dans lequel les aliments pour animaux de compagnie sont produits sous forme d'aliments secs, de préférence sous forme de croquettes.
